**Europäisches Patentamt**

**European Patent Office**

**Office européen des brevets**

(19)

(11) Veröffentlichungsnummer : **0 461 066 B1**

## (12) EUROPÄISCHE PATENTSCHRIFT

(45) Veröffentlichungstag der Patentschrift :
**20.09.95 Patentblatt 95/38**

(51) Int. Cl.$^6$ : **H02P 8/00**

(21) Anmeldenummer : **91810340.9**

(22) Anmeldetag : **02.05.91**

(54) **Verfahren und Schaltung für das Steuern eines Schritt- oder Synchronmotors.**

(30) Priorität : **05.06.90 CH 1888/90**

(43) Veröffentlichungstag der Anmeldung :
**11.12.91 Patentblatt 91/50**

(45) Bekanntmachung des Hinweises auf die
Patenterteilung :
**20.09.95 Patentblatt 95/38**

(84) Benannte Vertragsstaaten :
**DE ES FR GB IT NL SE**

(56) Entgegenhaltungen :
**EP-A- 0 234 264**
**WO-A-91/07009**
**DE-A- 3 007 553**

(73) Patentinhaber : **SAIA AG**
**Bahnhofstrasse 18**
**CH-3280 Murten (CH)**

(72) Erfinder : **Boillat, Pierre**
**20 Fin de Meyriez**
**CH-3280 Meyriez (CH)**

(74) Vertreter : **Steiner, Martin et al**
**c/o AMMANN PATENTANWÄLTE AG BERN**
**Schwarztorstrasse 31**
**CH-3001 Bern (CH)**

EP 0 461 066 B1

## Beschreibung

Schritt- oder Synchronmotoren werden je länger je mehr in verschiedensten Anwendungen eingesetzt, beispielsweise beim Automobilbau. Abgesehen davon, dass diese Motoren extremen Temperaturunterschieden ausgesetzt sein können, schwankt die verfügbare Betriebsspannung in vielen Fällen beispielsweise zwischen 8 und 16 V, in gewissen Fällen sogar zwischen 5 und 22 V. Geht man davon aus, dass das Drehmoment eines Motors praktisch direkt proportional ist der zugeführten Leistung, dann ändert sich das Drehmoment praktisch quadratisch mit der Betriebsspannung. Solche Unterschiede sind jedoch in der Praxis nicht annehmbar, sei es, dass die Motoren bei den niedrigsten Spannungen das erforderliche Antriebsdrehmoment nicht mehr aufbringen oder aber unwirtschaftlich überdimensioniert sein müssen. Dazu kommt, dass bei den höchsten Betriebsspannungen eine unzulässige Erwärmung der Motoren auftreten würde. Schliesslich sind die mit den Motoren gekuppelten Getriebe für die höchsten Drehmomente auszulegen, was ebenfalls ungünstig ist.

Aus der EP-A-0 234 264 ist es bekannt, einen Schrittmotor in Abhängigkeit von der Betriebsspannung mit entsprechender Impulsfrequenz bzw. Drehzahl anzutreiben. Damit wird jedoch eine Regelung zur Konstanthaltung des Drehmomentes weder angestrebt noch erreicht.

Die prioritätsältere PCT-Anmeldung WO-A-91/07009 beschreibt eine Steuerung für einen Mikroschrittmotor, wobei Sinus- und Cosinusströme in den Motorwicklungen gepulst zugeführt werden, und wobei die Impulsdauer in Abhängigkeit von der Betriebsspannung und der Motortemperatur im Sinne einer Konstanthaltung der Amplitude der Sinus- und Cosinusströme in den einzelnen Wicklungen gesteuert werden. Diese Steuerung ist aufwendig, da nicht nur die Impulsdauer, sondern ausserdem die Stromstärke der einzelnen Impulse, aus welchen die Sinus- und Cosinusströme aufgebaut sind, gesteuert werden muss.

Die vorliegende Erfindung betrifft demgegenüber ein Verfahren zur Steuerung eines Schritt- oder Synchronmotors gemäss Anspruch 1 bzw. eine Steuerschaltung gemäss den Ansprüchen 6 bzw. 9. Es ist in diesem Falle eine erhebliche Vereinfachung möglich, indem die Regelung der Antriebsimpulse ausschliesslich durch eine Regelung der Impulsdauer erfolgen kann. Eine weitere Steuerung zum Aufbau von Sinus- und Cosinusströmen zum Betrieb eines Mikroschrittmotors ist nicht erforderlich.

Die Erfindung wird nun anhand von Ausführungsbeispielen näher erläutert.

Fig. 1        zeigt ein erstes Ausführungsbeispiel,
Fig. 2        ist ein Diagramm zur Erläuterung der Konzeption der Ausführung gemäss Fig. 1,
Fig. 3        zeigt den Zusammenhang zwischen der Betriebsspannung und dem Drehmoment,
Fig. 4        zeigt ein zweites Ausführungsbeispiel,
Fig . 5       zeigt ein drittes Ausführungsbeispiel und
Fig. 6        zeigt Zusammenhänge zwischen der Betriebsspannung und der Erwärmung des Motors.

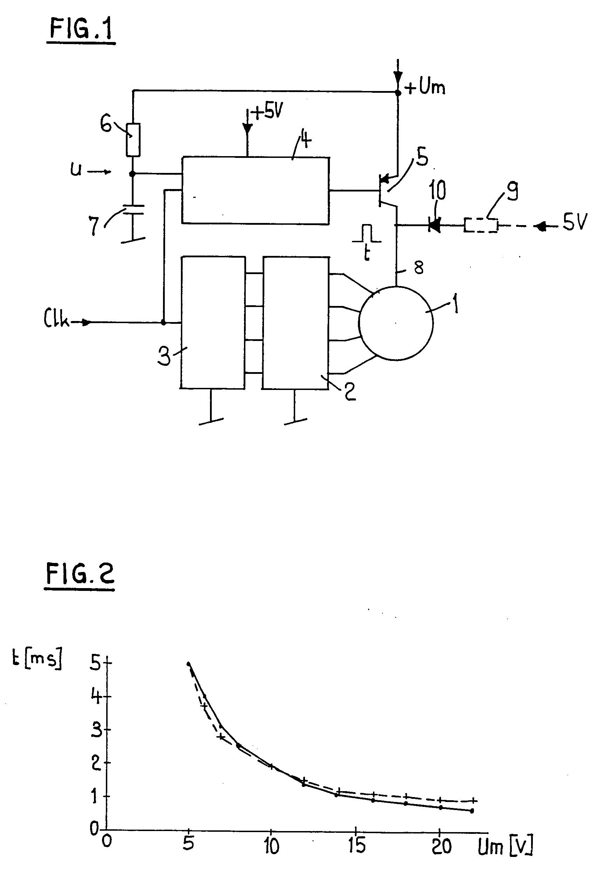

Fig. 1 zeigt einen Schritt- oder Synchronmotor 1, beispielsweise einen Zwei-Phasen-Unipolarmotor, in der Praxis auch Vier-Phasen-Motor genannt. Der Stromfluss in den Motorwicklungen wird durch eine Treiber-Schaltung 2 gesteuert, die ihrerseits durch eine Steuerschaltung 3 angesteuert wird. Eine Taktfrequenz Clk wird einem Eingang der Steuerschaltung 3 zugeführt. Die Taktfrequenz gelangt auch an den einen Eingang eines Univibrators 4, dessen Ausgang einen Schalttransistor 5 ansteuert. Der Schalttransistor 5 verbindet eine Spannungsquelle mit stark variabler Betriebsspannung Um mit dem Motor 1, wobei der Treiber 2 bestimmt, welcher Wicklung die einzelnen Stromimpulse zugeführt werden. Mit der Spannungsquelle ist auch ein Widerstand 6 verbunden, der mit einem Kondensator 7 ein RC-Glied bildet, das mit einem zweiten Eingang des Univibrators 4 verbunden ist. Diesem Univibrator wird eine stabilisierte Betriebsspannung von beispielsweise 5 V zugeführt. Die gemeinsame Zuleitung 8 zum Motor kann über einen Widerstand 9 und eine Diode 10 ebenfalls mit der stabilisierten Spannungsquelle von beispielsweise 5 V verbunden sein.

Durch Versuche wurde ermittelt, Impulse welcher Dauer t dem Motor 1 in Funktion der Betriebsspannung Um zugeführt werden müssen, um ein konstantes Motordrehmoment zu erzielen. Fig. 2 zeigt diesen Zusammenhang, nämlich einen exponentiellen Zusammenhang. Daraus wurde geschlossen, dass es möglich sein müsste, diesen Zusammenhang dadurch nachzubilden, dass dem Kondensator 7 jeweils ein Ladestrom zugeführt wird, welcher von der Betriebsspannung Um abhängt. Das ist nun selbstverständlich der Fall, wenn der Widerstand 6 mit der Betriebsspannung verbunden ist. Es zeigt sich, dass die dargestellte, einfache Schaltung tatsächlich zu einer praktisch optimalen Steuerung der Impulsdauer und damit zu einem konstanten Motordrehmoment führt, wenn das RC-Glied einem bestimmten Univibrator angepasst ist. Bei einer praktisch ausgeführten Schaltung wurde als Univibrator der IC 74 HC 123 der Firma National eingesetzt. Die am einen Eingang desselben angelegte Spannung des Kondensators 7 sollte im Hinblick auf die Charakteristik dieses Univibrators zwischen 1,47 und 2,67 V variieren, und zwar gemäss der Formel:

$$u = Um \cdot (1 - e^{\frac{-t}{T}}) \quad (1)$$

wobei T = RC

Daraus ergibt sich:

$$t = T \cdot \lg \frac{1}{1 - \dfrac{u}{Um}} \quad (2)$$

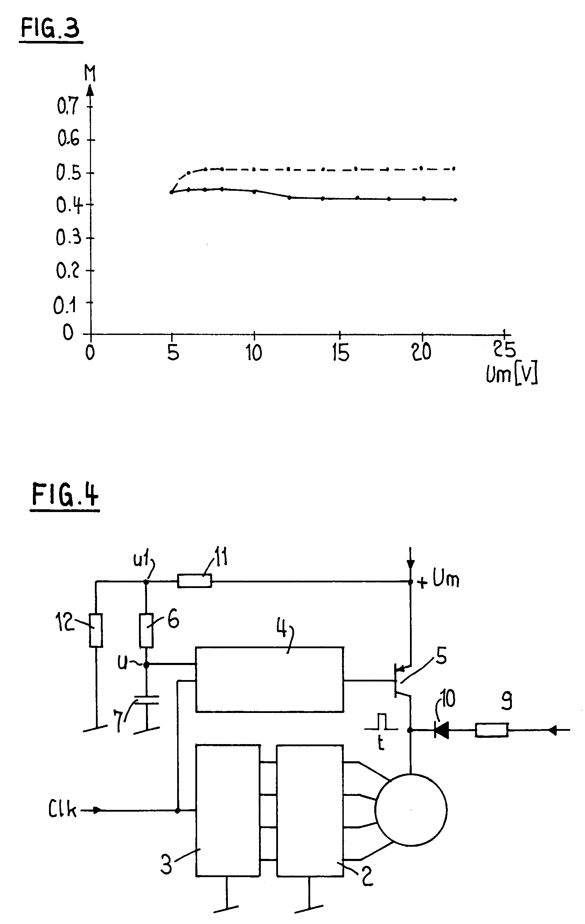

Daraus ergibt sich, dass t umso kürzer wird je höher die Betriebsspannung Um ist. Die praktisch resultierenden Werte von t sind sehr nahe bei den experimentell bestimmten Werten gemäss Fig. 2, in welcher die ausgezogene Linie die berechneten und die gestrichelte Linie die praktisch ermittelten Werte darstellt. Der bei dieser Schaltung resultierende Drehmomentverlauf ist in Fig. 3 durch die ausgezogene Linie dargestellt. Ist eine zusätzliche Speisung über den Widerstand 9 und die Diode 10 vorgesehen, ergibt sich der in Fig. 3 gestrichelt dargestellte Drehmomentverlauf.

Fig. 4 zeigt eine Ausführungsform, die weitgehend derjenigen nach Fig. 1 entspricht und in der entsprechende Schaltungselemente gleich bezeichnet sind wie in Fig. 1. Der Unterschied besteht darin, dass die Betriebsspannung Um mittels eines Spannungsteilers bestehend aus den Widerständen 11 und 12 auf eine geringere Spannung ul herabgesetzt ist. Diese Schaltung eignet sich für Betriebsspannungen, welche zwischen 8 und 16 V variieren, während die Ausführung gemäss Fig. 1 sich für einen Betriebsspannungsbereich von 5 bis 22 V eignet. Der Spannungsteiler 11, 12 ist so bemessen, dass die Spannung ul am RC-Glied 6, 7 von 8 auf 5 V herabgesetzt ist. Die Spannungsteiler-Widerstände 11, 12 sind so zu bemessen, dass die folgende Bedingung erfüllt ist:

$$\frac{1}{\dfrac{1}{R1} + \dfrac{1}{R2}} \ll R \quad (3)$$

In allen Fällen hängt das Drehmoment des Motors auch von dessen Temperatur, insbesondere der Wicklungstemperatur ab. Diese Wicklungstemperatur hängt wiederum ab von der Umgebungstemperatur, die gemäss Obenstehendem beispielsweise in einem Automobil in sehr weiten Grenzen variieren kann. Es ist daher vorteilhaft einen Widerstand 6 mit PTC-Charakteristik zu verwenden, was bedeutet, dass bei höheren Temperaturen die Spannung u am einen Eingang des Univibrators 4 weniger ansteigt als bei tieferer Temperatur und infolgedessen längere Antriebsimpulse erzeugt werden.

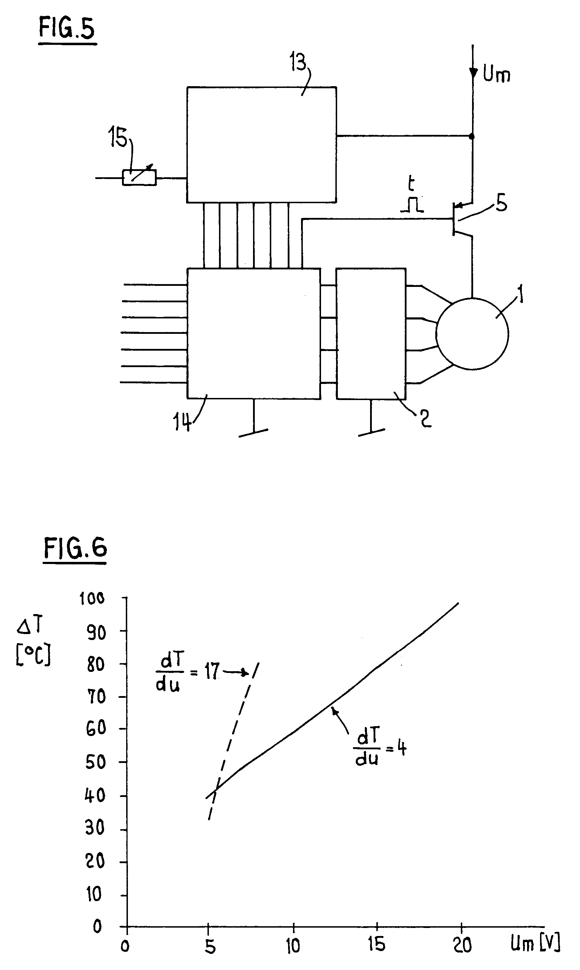

Fig. 5 zeigt eine weitere Ausführungsform, in welcher entsprechende Teile gleich bezeichnet sind wie in den Fig. 1 und 4. In diesem Falle wird jedoch die Betriebsspannung Um in einem A/D-Wandler 13 in einen digitalen Wert umgesetzt, welcher einem Mikroprozessor 14 zugeführt wird. Im Wandler 13 wird auch ein analoges Temperatursignal, das beispielsweise mittels eines Widerstandes 15 mit NTC- oder PTC-Charakteristik erzeugt wird, in eine digitale Information umgewandelt und dem Mikroprozessor 14 zugeführt. Dieser Mikroprozessor ist so programmiert, dass er die Impulsdauer anhand gespeicherter Daten in Abhängigkeit von der Betriebsspannung Um und der Umgebungstemperatur derart regelt, dass das Motordrehmoment M praktisch konstant ist. Der Mikroprozessor steuert zugleich die Impulsdauer mittels des Schalttransistors 5 als auch die Phasenumschaltung mittels des Treibers 2.

Es wurde eingangs erwähnt, dass die erfindungsgemässe Schaltung eine geringere Erwärmung des Motors zur Folge hat als bekannte Schaltungen, insbesondere eine Schaltung ohne Regelung der Impulsdauer. Fig. 6 zeigt einen Vergleich zwischen der maximalen Erwärmung des Motors in stationärem Betriebszustand und der Betriebsspannung. Bei einem ungeregelten Motor verläuft die gestrichelt dargestellte Erwärmungskurve sehr steil mit einem Wert $\frac{dT}{dU} = 17$, während die Erwärmungskurve für einen erfindungsgemäss geregelten Motor gemäss der ausgezogenen Linie in Fig. 6 wesentlich flacher verläuft mit einem Wert $\frac{dT}{dU} = 4$.

Während bei den Ausführungsformen nach den Fig. 1 und 4 der Bereich der Betriebsfrequenzen Clk, innerhalb welchem eine genügende Regelung erfolgt, etwas begrenzt ist und beispielsweise 100 bis 300 Hz beträgt, kann dieser Bereich bei der Ausführung nach Fig. 5 wesentlich weiter sein, indem der Mikroprozessor eine Regelung in Abhängigkeit von der Betriebsfrequenz vornimmt.

**Patentansprüche**

1.  Verfahren für das Steuern eines Schritt- oder Synchronmotors (1),
    wobei der Motor (1) durch Antriebsimpulse angetrieben wird, die dadurch erzeugt werden, dass ein zwischen den Motor (1) und eine Spannungsquelle eingefügter Leistungstransistor (5) getrennt ein- und ausgeschaltet wird,
    wobei die Betriebsspannung (Um) der Spannungsquelle stark variabel ist, und
    wobei die Dauer (t) der Antriebsimpulse von der Betriebsspannung (Um) in exponentieller Art so abhängig gemacht wird, dass hierdurch das Drehmoment des Motors (1) stets etwa gleich bleibt.

2. Verfahren nach Anspruch 1,
dadurch gekennzeichnet,
dass die Abhängigkeit exponentieller Art dadurch erzeugt wird, dass die Spannungsquelle mit ihrer jeweiligen Betriebsspannung (Um) den Kondensator (7) eines RC-Gliedes über dessen zugehörigen Widerstand (6) auflädt.

3. Verfahren nach Anspruch 2,
dadurch gekennzeichnet,
dass die jeweilige Dauer (t) dadurch bestimmt wird, dass ein dem RC-Glied nachgeschalteter Univibrator (4) die Spannung am Kondensator (7) abtastet.

4. Verfahren nach Anspruch 1,
dadurch gekennzeichnet,
dass die Abhängigkeit exponentieller Art in Form von Daten gespeichert wird,
dass die jeweilige Betriebsspannung (Um) durch einen A/D-Wandler (13) in einen digitalen Wert umgesetzt wird, und dass ein Mikroprozessor (14) anhand der gespeicherten Daten und des digitalen Wertes die jeweilige Dauer (t) so bestimmt, dass hierdurch das Drehmoment des Motors (1) stets etwa gleich bleibt.

5. Verfahren nach einem der Ansprüche 1 bis 4, dadurch gekennzeichnet, dass dem Motor zusätzlich Impulse von spannungsunabhängiger Dauer zugeführt werden.

6. Schaltungsanordnung für das Steuern eines Schrittoder Synchronmotors (1), umfassend
   - einen steuerbaren Schalttransistor (5), der zwischen den Motor (1) und eine Spannungsquelle mit stark variabler Betriebsspannung (Um) eingefügt ist,
   - eine Steuerschaltung (3) und eine nachfolgende Treiberschaltung (2) zum Ansteuern der jeweiligen Wicklungen des Motors (1)
   - einen Univibrator (4), dessen Ausgang mit dem Steuereingang des Leistungstransistors (5) verbunden ist,
   - ein RC-Glied, dessen Widerstand (6) an die Spannungsquelle und dessen Verbindung zwischen diesem Widerstand (6) und dem Kondensator (7) an einen ersten Eingang des Univibrators (4) angeschlossen ist, und
   - einen Takteingang, der mit einem zweiten Eingang des Univibrators (4) und parallel dazu mit dem Eingang der Steuerschaltung (3) verbunden ist.

7. Schaltung nach Anspruch 6, dadurch gekennzeichnet, dass der Widerstand (6) temperaturabhängig ist.

8. Schaltung nach Anspruch 6 oder 7, dadurch gekennzeichnet, dass dem Widerstand (6) des RC-Gliedes ein Spannungsteiler (11, 12) vorgeschaltet ist.

9. Schaltungsanordnung für das Steuern eines Schrittoder Synchronmotors (1), umfassend
   - einen steuerbaren Schalttransistor (5), der zwischen den Motor (1) und eine Spannungsquelle mit stark variabler Betriebsspannung (Um) eingefügt ist,
   - einen A/D-Wandler (13), dessen Signaleingang mit der Spannungsquelle zum Zwecke der Analog/Digital-Wandlung der Betriebsspannung verbunden ist, und
   - einen Mikroprozessor (14) mit zugeordnetem Speicher, der dem A/D-Wandler (13) nachgeschaltet ist und dessen Ausgänge mit dem Steuereingang des Leistungstransistors (5) und mit einer Treiberschaltung (2) zum Ansteuern der jeweiligen Wicklungen des Motors (1) verbunden sind,
   - wobei im Speicher Daten gespeichert sind, die eine funktionale Abhängigkeit exponentieller Art zwischen der Betriebsspannung (Um) und der Dauer (t) der Antriebsimpulse repräsentieren.

## Claims

1. Method for the control of a step or synchronous motor (1), the motor (1) being driven by drive pulses which are produced by separately switching on and off a power transistor (5) which is connected between the motor (1) and a voltage source, the operating voltage (Um) of said voltage source being highly variable, and the duration (t) of the drive pulses being exponentially related to the operating voltage (Um) in such a manner that the torque of the motor (1) is kept approximately constant.

2. Method according to claim 1, characterised in that the exponential relationship is produced by the fact that the capacitor (7) of an RC element is charged through its associated resistor (6) by the actual operating voltage (Um) of the voltage source.

3. Method according to claim 2, characterised in that the actual duration (t) is determined by a monovibrator (4) which is series-connected with said RC element and detects the voltage across said capacitor (7).

4. Method according to claim 1, characterised in that the exponential relationship is stored in the form of data, in that the actual operating voltage (Um) is converted into a digital value by an AD converter (13), and in that a microprocessor (14) determines the actual duration (t) by means of said data and of said digital value in such a manner that the torque of the motor (1) is kept approximately constant.

5. Method according to any one of claims 1 to 4, characterised in that pulses of voltage-independent duration are additionally supplied to the motor.

6. Circuit assembly for the control of a step or synchronous motor (1), comprising
   - a controllable switching transistor (5) which is connected between the motor (1) and a voltage source having a highly variable operating voltage (Um),
   - a control circuit (3) and a following driver circuit (2) for selectively feeding the corresponding coils of the motor (1),
   - a monovibrator (4) whose output is connected to the control input of said power transistor (5),
   - an RC element whose resistor (6) is connected to the voltage source and whose connection between said resistor and the capacitor (7) is connected to a first input of said monovibrator (4), and
   - a clock input which is connected to a second input of said monovibrator (4) and parallelly connected to the input of the control circuit (3).

7. Circuit according to claim 6, characterised in that said resistor (6) is temperature-dependent.

8. Circuit according to claim 6 or 7, characterised in that a voltage divider (11, 12) precedes the resistor (6) of said RC element.

9. Circuit assembly for the control of a step of synchronous motor (1), comprising
   - a controllable switching transistor (5) which is connected between the motor (1) and a voltage source having a highly variable operating voltage (Um),
   - an AD converter (13) whose signal input is connected to the voltage source for the purpose of an analog/digital conversion of the operating voltage, and
   - a microprocessor (14) with an associated memory, said microprocessor following said AD converter (13) and its outputs being connected to the control input of said power transistor (5) and to a driver circuit (2) for selectively feeding the corresponding coils of the motor (1),
   said memory containing data which represent a functional relationship of an exponential kind between the operating voltage (Um) and the duration (t) of the drive pulses.

**Revendications**

1. Procédé pour la commande d'un moteur pas à pas ou synchrone (1), le moteur étant entraîné par des impulsions d'entraînement qui sont produites en commutant et en interrompant un transistor de puissance (5) connecté entre le moteur (1) et une source de tension, la tension de service (Um) de la source de tension étant fortement variable, et la durée (t) des impulsions d'entraînement étant mise en relation exponentielle avec la tension de service de telle manière que le couple du moteur (1) reste approximativement constant.

2. Procédé selon la revendication 1, caractérisé en ce que la relation exponentielle est produite par le fait que la source de tension charge le condensateur (7) d'un circuit RC par l'intermédiaire de la résistance y associée (6) avec la tension de service (Um) momentanée.

3. Procédé selon la revendication 2, caractérisé en ce que la durée (t) est chaque fois déterminée par le fait qu'un univibrateur (4) connecté en série avec le circuit RC détecte la tension aux bornes du condensateur (7).

4. Procédé selon la revendication 1, caractérisée en ce que la relation exponentielle est mémorisée sous forme de données, que la tension de service (Um) momentanée est convertie en une valeur digitale par un convertisseur A/D (13), et qu'un microprocesseur (14) détermine chaque fois la durée (t) au moyen des données en mémoire et de la valeur digitale de telle manière que le couple du moteur (1) reste approximativement constant.

5. Procédé selon l'une quelconque des revendications 1 à 4, caractérisé en ce que des impulsions dont la durée est indépendante de la tension sont additionnellement alimentées au moteur.

6. Arrangement de circuits pour la commande d'un moteur pas à pas ou synchrone (1), comprenant
   - un transistor de commutation (5) à commande, branché entre le moteur (1) et une source de tension ayant une tension de service (Um) fortement variable,
   - un circuit de commande (3) et un circuit d'attaque (2) suivant pour la commande des bobines correspondantes du moteur (1),
   - un univibrateur (4) dont la sortie est reliée à l'entrée de commande du transistor de puissance (5),
   - un circuit RC dont la résistance (6) est reliée à la source de tension et dont la connexion entre ladite résistance (6) et le condensateur est reliée à une première entrée de l'univibrateur (4), et
   - une entrée de synchronisation, reliée à une deuxième entrée de l'univibrateur (4) et parallèlement reliée à l'entrée du circuit de commande (3).

7. Circuit selon la revendication 6, caractérisé en ce que la résistance (6) est variable avec la température.

8. Circuit selon la revendication 6 ou 7, caractérisé en ce que la résistance (6) du circuit RC est précédée d'un diviseur de tension (11, 12).

9. Arrangement de circuits pour la commande d'un moteur pas à pas ou synchrone (1), comprenant
   - un transistor de commutation (5) à commande, branché entre le moteur (1) et une source de tension ayant une tension de service (Um) fortement variable,
   - un convertisseur analogique/numérique (13) dont l'entrée de signal est reliée à la source de tension aux fins de la conversion analogique/numérique de la tension de service, et
   - un microprocesseur (14) avec mémoire associée, ledit microprocesseur suivant le convertisseur analogique/numérique (13) et ses sorties étant reliées à l'entrée du transistor de puissance (5) et à un circuit d'attaque (2) pour la commande des bobines correspondantes du moteur (1), la mémoire contenant des données représentant une relation fonctionnelle exponentielle entre la tension de service (Um) et la durée (t) des impulsions d'entraînement.

## FIG.1

## FIG.2

FIG.3

FIG.4

8

## FIG.5

## FIG.6